# EUROPÄISCHE PATENTSCHRIFT

(11) **EP 0 689 747 B1**
(45) Veröffentlichungstag und Bekanntmachung des Hinweises auf die Patenterteilung: **22.07.1998**
(21) Anmeldenummer: 94910322.0
(22) Anmeldetag: 08.03.1994
(51) Int. Cl.: H04L 25/02

(54) **BITRATENERKENNUNG**
BIT RATE RECOGNITION
RECONNAISSANCE DE DEBIT BINAIRE

(30) Priorität: 17.03.1993 DE 4308418
(43) Veröffentlichungstag der Anmeldung: 03.01.1996
(73) Patentinhaber: ELSA Aktiengesellschaft, 52070 Aachen (DE)
(72) Erfinder: KOENZEN, Ralf, D-52134 Herzogenrath (DE)
(74) Vertreter: Kohlmann, Kai, Dipl.-Ing.
(86) Internationale Anmeldenummer: DE9400237
(87) Internationale Veröffentlichungsnummer: WO9422252

(56) Entgegenhaltungen:
- US-A- 5 072 407
- US-A- 5 206 888

## Beschreibung

Die Erfindung betrifft ein Verfahren zur Erkennung von insbesondere auch hohen Bitraten eines seriellen Datenstroms einer Datenendeinrichtung, dessen Steuerbefehle mit einheitlichen binären Zeichen beginnen.

Die zum Stand der Technik gehörenden Datenübertragungsgeräte, wie beispielsweise Modems mit standardisiertem AT-Befehlssatz, dies ist eine Standard-Kommandosprache für die Kommunikation mit einem Datenübertragungsgerät, erlauben in der Regel verschiedene Übertragungsgeschwindigkeiten für die Datenübertragung von und zur Datenendeinrichtung.

Dabei ergibt sich das Problem, daß die Datenübertragungseinrichtung die von der Datenendeinrichtung verwendete Übertragungsrate erkennen können muß, um sich dieser anzupassen. Die Erkennung wird grundsätzlich dadurch ermöglicht, daß alle Steuerbefehle von der Datenendeinrichtung an die Datenübertragungseinrichtung mit einheitlichen binären Zeichen, nämlich beispielsweise mit dem ASC II Zeichen 'A' (binär 01000001) oder 'a' (binär 01100001) beginnen.

Bei einem bekannten Verfahren zur Erkennung der Bitrate, wird der empfangene Datenstrom mit einem mehrfachen der maximal zu erwartenden Bitrate abgetastet und über eine Software mit verschiedenen Bitmustern verglichen. Entsprechend des ermittelten Bitmusters kann dann auf die Bitrate und das empfangene binäre Zeichen ('A' oder 'a') geschlossen werden. Bei dem bekannten Verfahren muß die gesamte Befehlszeile ausgewertet, d.h. Bit für Bit softwaremäßig verarbeitet werden.

Dieses Verfahren hat den Nachteil, daß es nur für niedrige Bitraten bei gleichzeitig hohem Leistungseinsatz der in der Datenübertragungseinrichtung vorhandenen CPU realisierbar ist. Unter günstigen Voraussetzungen sind daher allenfalls Bitraten von bis zu 57.600 Bit/Sekunde möglich.

Aus der US, A, 5 072 407 ist bereits ein Verfahren zur Erkennung von Bitraten eines seriellen Datenstroms bekannt. Der serielle Datenstrom wird in eine digitale Verzögerungsstufe geleitet und die Bitrate mit einem speziellen Bitraten-Algorithmus berechnet. Hierfür ist ein erheblicher Schaltungsaufwand erforderlich. Insbesondere können keine gängigen Bausteine zur seriellen Datenübertragung verwendet werden. Darüber hinaus handelt es sich bei dem Verzögerungselement um ein in der Computertechnik gängiges Verzögerungselement relativ geringer Speichertiefe mit nur 24 Speicherplätzen.

Weiter ist aus JP, A, 57-103 546 ein System zur Einstellung der Bitrate bekannt. Das System besitzt keine Verzögerung des seriellen Datenstroms, so daß eine Erkennung hoher Bitraten ausgeschlossen ist.

Der Erfindung liegt daher die Aufgabe zugrunde, ein Verfahren zu schaffen, mit dem hohe Bitraten bei gleichzeitig geringer Belastung der CPU der Datenübertragungseinrichtung und geringem Schaltungsaufwand sicher erkennbar sind. Ferner liegt der Erfindung die Aufgabe zugrunde, eine Vorrichtung zur Durchführung des Verfahrens zur Verfügung zu stellen.

Die Lösung dieser Aufgabe basiert auf dem Gedanken, statt der Software-Lösung auf eine Hardware-Lösung mit gängigen Standardbauteilen zurückzugreifen.
Weiter beruht die Erfindung auf dem Gedanken, daß das Startbit bzw. die ersten Bits mit dem Wert "0" (Startfolge) von zwei '1' - Bits eingerahmt sind, so daß durch Bestimmung der zeitlichen Länge der Startfolge auf die von der Datenendeinrichtung verwendete Bitrate geschlossen werden kann.

Im einzelnen wird die Aufgabe dadurch gelöst, daß bei einem Verfahren der eingangs erwähnten Art,
- der serielle Datenstrom in eine als Schieberegister ausgebildete Verzögerungsstufe geleitet wird, die mit einem Vielfachen der maximal zu erwartenden Bitrate, der Schiebefrequenz, getaktet wird,
- während der Zeit, in der der Datenstrom die Verzögerungsstufe durchläuft, die Dauer des Startbits oder der ersten Bits mit dem Wert "0" durch Aktivierung eines Zählwerks ausgemessen wird,
- die aus dessen Zählerstand errechnete Bitrate in einen gängigen integrierten Baustein zur seriellen Datenübertragung einprogrammiert wird und
- die Verzögerungszeit mindestens entsprechend der maximalen Dauer der Startfolge sowie der Dauer für die Programmierung des integrierten Bausteins zur seriellen Datenübertragung durch eine CPU gewählt wird,
- wobei die hierzu erforderliche Speichertiefe des Schieberegisters mindestens dem Produkt aus Schiebefrequenz einerseits und der maximalen Länge des Startbits oder der ersten Bits mit dem Wert "0" sowie der Dauer der Programmierung andererseits entspricht.

Die digitale Verzögerungsstufe ermöglicht, daß der integrierte Baustein zur seriellen Datenübertragung, vorzugsweise ein in der Microprozessortechnik gängiger UART (Universal Asynchronous Receiver/Transmitter), vor Eintreffen des Datenstroms auf die zu erwartende Bitrate eingestellt werden kann, wobei während der Zeit, in der der Datenstrom die Verzögerungsstufe durchläuft, die Dauer des ersten Bits bzw. der ersten Bits mit dem Wert "0" ausgemessen wird und aus diesem Meßergebnis auf der CPU des Datenübertragungsgeräts die Bitrate ermittelt und in den integrierten Baustein zur seriellen Datenübertragung einprogrammiert wird.

Die Dauer der Startfolge wird durch Aktivierung eines Zählwerks ausgemessen und die aus dem Zählerstand errechnete Bitrate in den integrierten Baustein zur seriellen Datenübertragung einprogrammiert.

Da die Bitrate an dem integrierten Baustein zur seriellen Datenübertragung eingestellt sein muß, bevor das Startbit des ersten zu empfangenden Zeichens dort eintrifft, wird die Verzögerungszeit mindestens entsprechend der maximalen Dauer des Startbits bzw. der Startfolge sowie der Dauer für die Programmierung des integrierten Bausteins zur seriellen Datenübertragung gewählt. Die Befehlszeile kann dann ohne Probleme empfangen werden.

Unter Anwendung des vorstehend beschriebenen Verfahrens läßt sich auch eine Hardware-Lösung für die Bitratenerkennung realisieren, die das Problem löst, daß der UART vor Beginn des Datenstroms auf die zu erwartende Bitrate eingestellt werden muß, andererseits zu diesem Zeitpunkt die Bitrate noch nicht bekannt ist.

Um bei einer
- eine einem integrierten Baustein zur seriellen Datenübertragung vorgeschaltete, digitale Verzögerungsstufe,
- ein Zählwerk,
- eine mit dem Zählwerk und dem integrierten Baustein zur seriellen Datenübertragung verbundene Rechnereinheit (CPU)
- und einen Taktgeber für das Zählwerk und die Verzögerungsstufe
aufweisenden Vorrichtung zur Durchführung des vorstehend beschriebenen Verfahrens die Signalform des seriellen Signals durch die Verzögerung nicht zu stark zu verfälschen, ist die Verzögerungsstufe als digitales Schieberegister, das mit einem Vielfachen der maximal zu erwartenden Bitrate getaktet wird (Schiebefrequenz), ausgestaltet. Die Schiebefrequenz ist vorzugsweise größer oder gleich der 8-fachen zur erwartenden Bitrate.

In vorteilhafter Ausgestaltung der Erfindung wird das Zählwerk durch eine über eine Resetleitung mit der CPU verbundene Torsteuerung sowie einen Zähler realisiert, wobei die Torsteuerung darüber hinaus eine Interruptleitung zur CPU besitzt und von der Torsteuerung über den Zähler zur CPU eine Leitung für den Zählertakt führt.

Nachfolgend wird die Erfindung anhand eines Ausführungsbeispieles des näheren erläutert.

Es zeigen
- Figur 1:: die Signalfolge auf der Datenleitung zur Datenübertragungseinrichtung, sowie
- Figur 2:: ein Blockschaltbild einer Vorrichtung zur Durchführung des erfindungsgemäßen Verfahrens sowie
- Figur 3:: ein Schaltbild einer möglichen Implementierung der Bitratenerkennung.

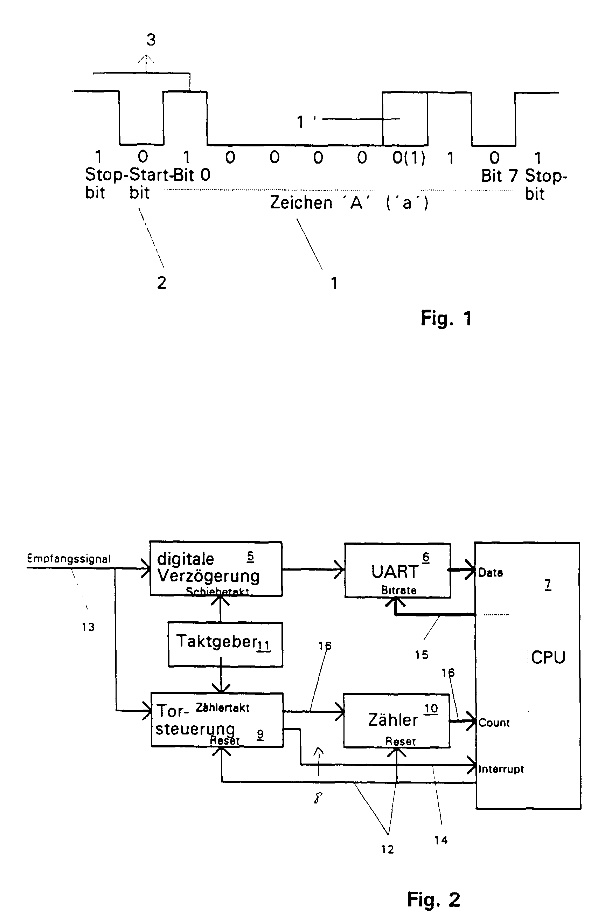

Die Steuerbefehle von der Datenendeinrichtung an die Datenübertragungseinrichtung beginnen mit dem ASCII Zeichen 'A' (binär 01000001) oder 'a' (binär 01100001). Diese Binärzeichen 'A' bzw. 'a' sind in Figur 1 mit den Positionsziffern 1 bzw. 1' gekennzeichnet. Ihre Übertragung erfolgt vom niedrigstwertigen zum höchstwertigen Bit. In Verbindung mit dem Startbit 2 der Asynchronübertragung ergibt sich auf der Datenleitung zur Datenübertragungseinrichtung die insgesamt mit 3 bezeichnete Signalfolge "1-0-1". Das Startbit 2 ist erkennbar von zwei '1' - Bitzeichen eingerahmt. Durch Bestimmung der zeitlichen Länge des Startbits 2 wird auf die von der Datenendeinrichtung verwendete Bitrate geschlossen.

Die Vorrichtung zur Erkennung der Bitrate besteht aus einem Schieberegister 5 zur digitalen Verzögerung, einem UART 6, der mit einer CPU 7 der Datenübertragungseinrichtung verbunden ist. Weiter besitzt die Vorrichtung ein insgesamt mit 8 bezeichnetes Zählwerk, das aus einer Torsteuerung 9 sowie einem Zähler 10 besteht. Ein Taktgeber 11 sorgt für die erforderliche Schiebefrequenz im Schieberegister 5 sowie den Zählertakt an der Torsteuerung 9. Die Funktionsweise der Vorrichtung ist wie folgt:

Wenn die CPU 7 eine neue, entsprechend der Figur 1 eingeleitete Befehlszeile erwartet, setzt sie die Torsteuerung 9 sowie den Zähler 10 über eine Resetleitung 12 zurück. Die Torsteuerung 9 wird nun für die Dauer des Startbits 2 auf einer vom Datenendgerät kommenden Empfangs leitung 13 den Takt des Taktgebers 11 zum Zähler 10 durchschalten. Nach dem Ende des Startbits 2, d.h. beim Wechsel vom Zustand "null" auf "eins" signalisiert die Torsteuerung 9 über eine zur CPU 7 führende Interruptleitung 14, daß die Messung des Startbits beendet ist. Die CPU 7 kann sodann aus dem Zählerstand des Zählers 10, der proportional zur Dauer des Startbits ist, die Bitrate in Bit/Sekunde ermitteln und diese über eine Programmleitung 15 in den UART 6 programmieren.

Da die Verzögerungszeit entsprechend der maximalen Dauer des Startbits 2 sowie der Dauer für die Programmierung des UARTs 6 gewählt wird, kommen die über die Leitung 13 empfangenen Signale erst am UART 6 an, wenn dieser auf die von der CPU7 errechnete Bitrate eingestellt ist.

Die Torsteuerung 9 bleibt bis zum Rücksetzen über die Resetleitung 8 blockiert.

Geht man beispielsweise von einer Schwankungsbreite der zu erkennenden Bitraten von 300 Bit/Sekunde bis 230.400 Bit/Sekunde aus, so ergibt sich
a) die maximale Länge des Startbits 2 zu
   **1/300 Bit/s = 3,3 ms.**
   Um diese Zeit zuzüglich der Reaktionszeit der CPU muß das Schieberegister den Datenstrom verzögern;
b) die Schiebefrequenz bei 8-facher maximal zu erwartender Bitrate zu
   **230.400 Bit/s ∗ 8 = 1,8432 MHz.**

Für die errechnete Verzögerung von 3,3 ms ergibt sich bei einer Frequenz von 1,8432 MHz eine Speichertiefe des Schieberegisters 5 von
1,8432 MHz ∗ 3,3 ms = 6.144 Schritte zuzüglich der Rechenzeit der CPU 7.

Da die Verzögerungsdauer eines derartigen Speichers im ms-Bereich liegt, tritt die generelle Verzögerung der Verarbeitung des Datenstroms nicht störend in Erscheinung.

Ohne die erfinderische Lehre zu verlassen, können einzelne oder mehrere der aus Fig. 2 ersichtlichen Komponenten in einem integrierten Baustein zusammengefaßt sein.

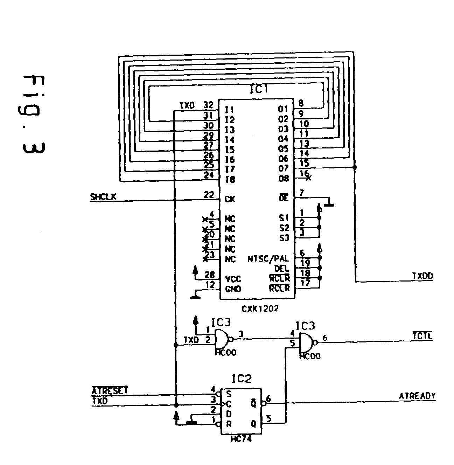

Figur 3 zeigt eine mögliche Implementierung der Bitratenerkennung. Zentraler Bestandteil der Schaltung sind das Schieberegister IC1, das für die digitale Verzögerung sorgt sowie die aus IC2 und IC3 bestehende Torsteuerung. Der weiterhin zur Schaltung gehörende Zähler sowie der Standard-UART (vgl. Position 6 und 10 von Figur 2) sind direkt in der CPU (vgl. Position 7 von Figur 2) integriert und daher im Schaltplan nicht gezeigt. Der UART wird an der in Figur 3 ersichtlichen Leitung TXDD angeschlossen, während der Zähler über das von der Torsteuerung (IC2 und IC3) erzeugte Signal TCTL gestartet bzw. gestoppt wird.

Im einzelnen arbeitet die Schaltung wie folgt:

Das serielle Empfangssignal (vgl. Position 13 von Figur 2) wird auf der Leitung TXD empfangen und in das 8-Bit Schieberegister IC1 (1136 Stufen*8 Bit) geleitet. Da nur ein 1-Bit breites Signal verzögert werden muß, wird das Signal am Ausgang des Schieberegisters wieder zu einem anderen Eingang zurückgekoppelt (vgl. Positionen 0 und I an IC1), um insgesamt die 7-fache Durchlaufzeit zu erreichen. Getaktet wird das Schieberegister IC1 über das Signal SHCLK mit 1,8432 MHz, wodurch das Eingangssignal um 4,32 ms verzögert wird. Diese Verzögerungszeit reicht selbst bei einem Startbit 300 bit/s (= 3,3 ms) zuzüglich der Interrupt-Reaktionszeit für die Programmierung des UARTs. Das verzögerte Empfangssignal steht dann an der Anschlußleitung Leitung TXDD des UART zur Verfügung.

Die aus IC2 und IC3 aufgebaute Torsteuerung dient dem Ausmessen der Startfolge. Vor jedem Meßvorgang wird die Torsteuerung über einen Null-Impuls am Eingang ATRESET zurückgesetzt. Hierdurch wird das Signal ATREADY deaktiviert. Sobald nun das Eingangssignal 0-Pegel hat, wird das Zähler-Kontrollsignal TCTL aktiv und gibt den Zähler über eine Zählerkontrollsignalleitung (vgl. Position 16 in Figur 2) frei. Sobald das Eingangssignal TXD wieder den 1-Pegel erreicht hat, wird einerseits das Zähler-Kontrollsignal TCTL wieder deaktiviert, andererseits schaltet das Flip-Flop, realisiert durch IC2, und signalisiert hierdurch am Ausgang ATREADY der CPU, daß der Meßvorgang beendet wurde. Dieses Signal löst nachfolgend einen Interrupt aus, der die in Figur 3 nicht dargestellte CPU (vgl. Position 7 in Figur 2) veranlaßt, den Zählerstand zu ermitteln und die zugehörige Bitrate in den ebenfalls in Figur 3 nicht dargestellten UART (vgl. Position 6 in Figur 2) zu programmieren.

Der nun umgeschaltete Flip-Flop IC2 der Torsteuerung verhindert weiterhin, daß folgende 0-Bits den Zähler wieder freigeben können.

## Patentansprüche

1. Verfahren zur Erkennung von insbesondere auch hohen Bitraten eines seriellen Datenstroms einer Datenendeinrichtung, dessen Steuerbefehle mit einheitlichen binären Zenchen beginnen, dadurch gekennzeichnet, daß
- der serielle Datenstrom in eine als Schieberegister ausgebildete Verzögerungsstufe (5) geleitet wird, die mit einem Vielfachen der maximal zu erwartenden Bitrate, der Schiebefrequenz, getaktet wird,
- während der Zeit, in der der Datenstrom die Verzögerungsstufe durchläuft, die Dauer des Startbits oder der ersten Bits mit dem Wert "0" durch Aktivierung eines Zählwerks (8) ausgemessen wird,
- die aus dessen Zählerstand errechnete Bitrate in einen gängigen integrierten Baustein (6) zur seriellen Datenübertragung einprogrammiert wird und
- die Verzögerungszeit mindestens entsprechend der maximalen.Dauer der Startfolge sowie der Dauer für die Programmierung des integrierten Bausteins zur seriellen Datenübertragung durch eine CPU gewählt wird,
- wobei die hierzu erforderliche Speichertiefe des Schieberegisters mindestens dem Produkt aus Schiebefrequenz einerseits und der maximalen Länge des Startbits oder der ersten Bits mit dem Wert "0" sowie der Dauer der Programmierung andererseits entspricht.

2. Vorrichtung zur Erkennung von insbesondere auch hohen Bitraten eines seriellen Datenstroms einer Datenendeinrichtung, dessen Steuerbefehle mit einheitlichen binären Zeichen beginnen, gekennzeichnet durch
- eine einem gängigen integrierten Baustein zur seriellen Datenübertragung vorgeschaltete digitale Verzögerungsstufe (5), wobei die Verzögerungsstufe (5) ein digitales Schieberegister ist, das mit einem Vielfachen der maximal zu erwartenden Bitrate getaktet wird (Schiebefrequenz), in die der serielle Datenstrom geleitet wird,
- ein Zählwerk (8), das aus einer über eine Resetleitung (12) mit einer CPU (7) verbundenen Torsteuerung (9) sowie einem Zähler (10) besteht, das während der Zeit, in der der Datenstrom die Verzögerungsstufe durchläuft, die Dauer der ersten Bits mit dem Wert "0" (Startfolge) durch Aktivierung des Zählwerks ausmißt,
- die mit dem Zählwerk (8) und dem integrierten Baustein zur seriellen Datenübertragung verbundene Rechnereinheit (7) (CPU), die aus dem Zählerstand des Zählers (10) die Bitrate ermittelt und über eine Programmleitung in den Baustein zur seriellen Datenübertragung programmiert und die die Torsteuerung (9) sowie den Zähler (10) über eine Resetleitung (12) zurücksetzt, wenn die Rechnereinheit (7) eine neue Befehlszeile erwartet,
- einen Taktgeber (11) für das Zählwerk (8) und die Verzögerungsstufe (5), der für die erforderliche Schiebefrequenz im Schieberegister sowie den Zählertakt an der Torsteuerung (9) des Zählwerks (8) sorgt.

3. Vorrichtung nach Anspruch 2, dadurch gekennzeichnet, daß die Schiebefrequenz größer oder gleich der 8-fachen zu erwartenden Bitrate ist.

4. Vorrichtung nach einem der Ansprüche 2 oder 3, dadurch gekennzeichnet, daß die Torsteuerung darüber hinaus eine Interrupt-Leitung (14) zur CPU (7) besitzt und von der Torsteuerung (9) über den Zähler (10) zur CPU (7) eine Leitung (16) für die Zählerinformation führt.

5. Vorrichtung nach einem der Ansprüche 2 - 4, dadurch gekennzeichnet, daß zwischen dem vorzugsweise als UART (6) ausgebildeten Baustein zur seriellen Datenübertragung und der CPU (7) eine Leitung (15) zur Programmierung des UARTs mit der von der CPU errechneten Bitrate besteht.

## Claims

1. A process for detecting bit rates, in particular also high bit rates, of a serial data stream of a data terminal whose control instructions start with uniform binary characters, characterized in that
- the serial data stream is led into a delay stage (5) configured as a shift register; the said delay stage (5) is clocked with a multiple of the maximum expected bit rate of the shift frequency;
- during the time in which the data stream progresses through the delay stage, the duration of the start bit or the first bit with the value "0" is measured by activating a register 8;
- the bit rate calculated from its counter reading is programmed into a common integrated component (6) for serial data transmission; and
- the delay time is selected at least according to the maximum duration of the start sequence as well as the duration for programming the integrated component for serial data transmission by a CPU;
- whereby the storage depth required for this, of the shift register, equates to at least the product of the shift frequency on the one hand and the maximum length of the start bit or the first bit with the value "0" as well as the duration of programming on the other hand.

2. A device for detecting bit rates, in particular also high bit rates, of a serial data stream of a data terminal whose control instructions start with uniform binary characters, characterized by
- a digital delay stage (5) connected in series, for serial data transmission, to a common integrated component; with the delay stage (5) being a digital shift register which is clocked at a multiple of the maximum expected bit rate (shift frequency), into which delay stage (5) the serial data stream is led;
- a register (8) comprising a gate control (9) connected to a CPU (7) by way of a reset line (12) and comprising a counter (10) which during the time in which the data stream progresses through the delay stage, measures the duration of the first bit with the value "0" (start sequence) by activating the register;
- the CPU (7) connected with the counter (8) and the integrated component for serial data transmission, which determines the bit rate from the counter reading of the counter (10) and by way of a program line programs it in the component for serial data transmission and which resets the gate control (9) as well as the counter (10) by way of a reset line (12) when the CPU (7) expects a new command line;
- a clock (11) for the register (8) and the delay stage (5), which clock (11) ensures the required shift frequency in the shift register as well as the clock speed at the gate control (9) of the register (8).

3. A device according to claim 2, characterized in that the shift frequency is larger than or equal to the 8-fold bit rate to be expected.

4. A device according to one of claims 2 or 3, characterized in that the gate control in addition comprises an interrupt line (14) to the CPU (7) and that a line (16) for the counter information leads from the gate control (9) via the counter (10) to the CPU (7).

5. A device according to one of claims 2 - 4, characterized in that between the component for serial data transmission (which component is preferably configured as an UART (6)) and the CPU (7) there is a line (15) for programming the UART with the bit rate calculated by the CPU.

## Revendications

1. Procédé pour la reconnaissance de débits binaires, en particulier aussi de débits élevés, d'un flux de données en série d'un terminal de saisie de données, dont les instructions de commande commencent par des signes binaires uniformes, caractérisé en ce que :
- le flux de données en série est acheminé dans un élément de temporisation (5) conçu sous forme de registre à décalage et cadencé avec un multiple du débit binaire maximum théorique de la fréquence de décalage,
- pendant le temps que le flux de données met à traverser l'élément de temporisation, la durée du bit de départ ou des premiers bits ayant la valeur "O" est mesurée par activation d'un totalisateur (8),
- le débit binaire relevé à partir de cette situation du compteur est programmé dans un module (6) intégré de type courant pour la transmission de données en série, et
- le temps de retard est sélectionné par une U.C. au moins en fonction de la durée maximum de la séquence de départ et de la durée pour la programmation du module intégré de transmission de données en série,
- étant précisé que la profondeur de mémoire nécessaire à cet effet correspond au moins au produit de la fréquence de décalage, d'une part, et de la longueur maximum du bit de départ ou des premiers bits ayant la valeur "0", et de la durée de la programmation, d'autre part.

2. Dispositif pour la reconnaissance de débits binaires, en particulier aussi de débits élevés, d'un flux de données en série d'un terminal de saisie de données dont les instructions de commande commencent par des signes binaires uniformes, caractérisé par :
- un élément de temporisation numérique (5) monté en amont d'un module intégré de type courant, pour la transmission de données en série, l'élément de temporisation numérique (5) étant un registre à décalage numérique qui est cadencé avec un multiple du débit binaire maximum théorique (fréquence de décalage) et dans lequel le flux de données en série est acheminé,
- un totalisateur (8) composé d'une commande à portes (9) raccordée à une U.C. (7) par une ligne de restauration (12), et d'un compteur (10) qui mesure la durée du premier bit ayant la valeur "0" (séquence de départ) par activation du totalisateur, pendant le temps que le flux de données met à traverser l'élément de temporisation,
- l'unité de calculateur (7) (U.C.) raccordée au totalisateur (8) et au module intégré de transmission de données en série, laquelle détermine le débit binaire à partir de la situation du compteur (10) et programme ce débit dans le module de transmission de données en série et qui remet à zéro la commande à portes (9) et le compteur (10) par l'intermédiaire d'une ligne de restauration (12) lorsque l'unité de calculateur (7) attend une nouvelle ligne d'instructions,
- un rythmeur (11) destiné au totalisateur (8) et à l'élément de temporisation (5), et qui se charge de la fréquence de décalage requise dans le registre à décalage et de la cadence de comptage au niveau de la commande à portes (9) du totalisateur (8).

3. Dispositif suivant la revendication 2, caractérisé en ce que la fréquence de décalage est supérieure ou égale à huit fois le débit binaire à attendre.

4. Dispositif suivant l'une des revendications 2 ou 3, caractérisé en ce que la commande à portes présente en outre une ligne d'interruption (14) conduisant à l'U.C. (7), et en ce qu'une ligne (16) pour l'information compteur mène de la commande à portes (9) à l'U.C. (7), en passant par le compteur (10).

5. Dispositif suivant l'une des revendications 2-4, caractérisé en ce qu'entre le module de transmission de données en série, conçu, de préférence, sous forme de UART (6), et l'U.C. (7), on a prévu une ligne (15) de programmation de l'UART avec le débit binaire calculé par l'U.C.
